(19) Europäisches Patentamt
European Patent Office
Office européen des brevets

(11) EP 4 782 504 A1

(12) **EUROPEAN PATENT APPLICATION**
published in accordance with Art. 153(4) EPC

(43) Date of publication:
**29.07.2026 Bulletin 2026/31**

(21) Application number: **24867985.4**

(22) Date of filing: **19.08.2024**

(51) International Patent Classification (IPC):
***C08L 83/07*** *(2006.01)* ***C08K 3/36*** *(2006.01)*
***C08K 9/06*** *(2006.01)*

(52) Cooperative Patent Classification (CPC):
**C08K 3/36; C08K 9/06; C08L 83/04**

(86) International application number:
**PCT/JP2024/029305**

(87) International publication number:
**WO 2025/062904 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 JP 2023156548**

(71) Applicant: **SHIN-ETSU CHEMICAL CO., LTD.**
**Tokyo 100-0005 (JP)**

(72) Inventors:
- **KITAGAWA, Taichi**
  **Annaka-shi, Gunma 379-0224 (JP)**
- **MATSUMURA, Kazuyuki**
  **Annaka-shi, Gunma 379-0224 (JP)**
- **MATSUMOTO, Nobuaki**
  **Annaka-shi, Gunma 379-0224 (JP)**
- **OZAI, Toshiyuki**
  **Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

# (54) SILICONE COMPOSITION AND METHOD FOR PRODUCING SAME

(57) The present invention is a silicone composition comprising: (A) an organopolysiloxane having the viscosity of 0.01 to 100 Pa·s and two or more alkenyl groups bonded to a silicon atom per molecule; (B) hydrophobic silica particles having a volume median diameter of 10 nm to 1,000 nm, a degree of hydrophobization, by a methanol titration method, of 60% or more, and an alkenyl group bonded to a silicon atom on the surface; (C) an organohydrogenpolysiloxane having two or more hydrogen atoms bonded to a silicon atom per molecule: an amount to provide 0.4 to 5.0 moles of the hydrogen atoms bonded to a silicon atom of the component (C) per mole of a total of the alkenyl groups bonded to a silicon atom in the composition; and (D) a platinum group metal catalyst. This can provide a silicone composition having excellent handling properties and high tear strength after curing.

EP 4 782 504 A1

## Description

TECHNICAL FIELD

The present invention relates to a silicone composition and its production method.

BACKGROUND ART

Silicone rubber has excellent heat resistance, cold resistance, and electrical insulation, and is widely used in industries, such as electrical and electronics, automobiles, and construction. The siloxane polymer that forms silicone rubber has very weak intermolecular force, so silicone rubber formed by curing only the polymer ends up being very weak in strength. When silicone rubber is used as an adhesive, sealant, or potting material for parts that generate high heat, due to thermal expansion of the part with the high heat generation, there is a problem that the stress is applied to the silicone rubber material, causing cracks. Therefore, high mechanical strength is required. Furthermore, when used as a mold-making material, a lens material for an ultrasound probe, or the like, both are used at room temperature, but are subject to stress during use, so high tear strength is required. This makes the material inadequate in strength for practical use. To solve this problem, reinforcing silica, such as fumed silica, is usually added to improve mechanical strength. For the purpose of improving the mechanical strength, a silicone composition in which a reinforcement agent, such as silica particles or a silicone resin, is blended is also proposed (Patent Documents 1 and 2). However, when the silica particles with non-hydrophobized or insufficiently hydrophobized surfaces are used, as viscosity and thixotropy become high, resulting in a drop in fluidity, the handling properties are poor. Further, when only a silicone resin is used as the reinforcement agent, the degree of improvement in mechanical strength is low, and sufficient strength cannot be achieved. Furthermore, although there is a proposal for a silicone composition having high transparency by using sol-gel silica with the surface hydrophobized, the mechanical strength is insufficient (Patent Documents 3 and 4).

CITATION LIST

PATENT LITERATURE

Patent Document 1: JP2000-351901A
Patent Document 2: JP2013-64089A
Patent Document 3: JP2012-144595A
Patent Document 4: JP2019-1975A

SUMMARY OF INVENTION

TECHNICAL PROBLEM

Recently, it has been desired to develop a high strength silicone rubber material that has excellent handling properties and does not generate crack even when stress is applied.

The present invention has been made in view of the above circumstances. An object of the present invention is to provide: a silicone composition having excellent handling properties (fluidity) and high tear strength after curing; and its production method.

SOLUTION TO PROBLEM

To solve the above problem, the present invention provides a silicone composition comprising the following components (A) to (D):

(A) an organopolysiloxane having the viscosity at 25°C of 0.01 to 100 Pa·s and two or more alkenyl groups bonded to a silicon atom in one molecule: 100 parts by mass;
(B) hydrophobic silica particles having a volume median diameter in the range of 10 nm to 1,000 nm, a degree of hydrophobization, as determined by a methanol titration method, of 60% or more, and an alkenyl group bonded to a silicon atom on the surface: 10 to 500 parts by mass;
(C) an organohydrogenpolysiloxane having two or more hydrogen atoms bonded to a silicon atom in one molecule: an amount to provide 0.4 to 5.0 moles of the hydrogen atoms bonded to a silicon atom of the component (C) per mole of a

total of the alkenyl groups bonded to a silicon atom in the composition; and
(D) a platinum group metal catalyst: an effective amount.

The inventive silicone composition is a silicone composition having excellent handling properties and high tear strength after curing.
In this event, the component (B) preferably has an $R^2SiO_{3/2}$ unit ($R^2$ represents a substituted or unsubstituted monovalent hydrocarbon group having 1 to 20 carbon atoms) and an $R^A{}_{(a)}R^3{}_{(3-a)}SiO_{1/2}$ unit ("a" represents an integer of 1 to 3, $R^A$ represents an identical or different kind of substituted or unsubstituted alkenyl group having 2 to 8 carbon atoms, and $R^3$ represents an identical or different kind of substituted or unsubstituted alkyl group having 1 to 6 carbon atoms.) on the silica surface.
Further, the component (B) more preferably has an $R^3{}_3SiO_{1/2}$ unit ($R^3$ represents an identical or different kind of substituted or unsubstituted monovalent hydrocarbon group having 1 to 6 carbon atoms) on the silica surface.
The component (B) containing such a unit enhances a degree of hydrophobilization and can be preferably used in the inventive silicone composition.
The component (B) preferably has a volume median diameter of 10 nm to 200 nm.
The silicone composition containing such a component (B) exhibits more excellent handling properties and high tear strength after curing.
The blending amount of the component (B) is preferably 100 to 300 parts by mass relative to 100 parts by mass of the component (A).
Such a silicone composition exhibits more excellent handling properties and high tear strength after curing.
Further, the silicone composition preferably comprises a reaction control agent (E) in an amount of 0.01 to 5.0 parts by mass relative to 100 parts by mass of the component (A).
The inventive silicone composition may contain such a reaction control agent.
The present invention provides a method for producing the above silicone composition, comprising a process of producing the component (B) by a step comprising the following ($\alpha$), ($\beta$), and (y), and a process of mixing, at least, the component (B) with the components (A), (C), and (D):

($\alpha$) a step of obtaining a dispersion of hydrophilic silica particles by hydrolyzing and condensing a tetrafunctional silane compound represented by the following general formula (i) and at least one of alkyl silicates represented by the following general formula (ii), in the presence of a basic substance, in a mixed solution of a hydrophilic organic solvent and water,

$$Si(OR^4)_4 \qquad (i)$$

$$Si(OR^4)_3\text{-}(\text{-}SiO(OR^4)_2\text{-})_m\text{-}Si(OR^4)_3 \qquad (ii)$$

wherein $R^4$ represents an identical or different kind of monovalent hydrocarbon group having 1 to 6 carbon atoms, and "m" represents 1 to 100;
($\beta$) a step of obtaining a dispersion of silica particles that are an intermediate of the component (B) by treating a surface of the hydrophilic silica particles by adding at least one of a trifunctional silane compound represented by the following general formula (iii) and its (partial) hydrolysis condensate into the obtained dispersion of the hydrophilic silica particles,

$$R^2Si(OR^5)_3 \qquad (iii)$$

wherein $R^2$ represents a substituted or unsubstituted monovalent hydrocarbon group having 1 to 20 carbon atoms, and $R^5$ represents an identical or different kind of monovalent hydrocarbon group having 1 to 6 carbon atoms; and
($\gamma$) a step of obtaining the hydrophobic silica particles having an alkenyl group bonded to a silicon atom on the surface, which are the component (B), by treating a surface of silica particles, which are intermediates of the component (B), by adding a surface treatment agent comprising at least one of a silazane compound represented by the following general formula (iv) and a monofunctional silane compound represented by the following general formula (v) into the obtained dispersion of silica particles that are an intermediate of the component (B),

$$R^A{}_{(a)}R^3{}_{(3-a)}SiNRSiR^A{}_{(a)}R^3{}_{(3-a)} \qquad (iv)$$

$$R^A{}_{(a)}R^3{}_{(3-a)}SiX \qquad (v)$$

wherein "a" represents an integer of 1 to 3, $R^A$ represents an identical or different kind of substituted or unsubstituted

alkenyl group having 2 to 8 carbon atoms, $R^3$ represents an identical or different kind of substituted or unsubstituted alkyl group having 1 to 6 carbon atoms, and "X" represents an OH group or a hydrolyzable group.

The production method, including such steps, can readily produce a silicone composition having excellent handling properties and high tear strength.

The surface treatment agent of the step (y) preferably further comprises at least one of a silazane compound represented by the following general formula (vi) and a monofunctional silane compound represented by the following general formula (vii),

$R^3_3SiNHSiR^3_3$ (vi)

$R^3_3SiX$ (vii)

wherein $R^3$ represents an identical or different kind of substituted or unsubstituted alkyl group having 1 to 6 carbon atoms, and "X" represents an OH group or a hydrolyzable group.

The production method, including such steps, enhances a degree of hydrophobilization of the component (B) and can readily produce a silicone composition having more excellent handling properties.

ADVANTAGEOUS EFFECTS OF INVENTION

As described above, the inventive silicone composition is excellent in handling properties and the inventive silicone composition after curing has high tear strength. Such a silicone composition of the present invention can be used for applications requiring fluidity, transparency, and high tear strength. For example, it can be used as a material that requires crack resistance, such as an adhesive or sealing material for heat-generating components, potting material, or the like. It can also be used as a material that is used at room temperature but requires high tear strength, such as a mold-making material, an ultrasound probe material. In other words, when the silicone composition of the present invention is used, the resulting product has mechanical strength that can suppress cracks possibly caused after curing by thermal stress or external stress.

DESCRIPTION OF EMBODIMENTS

As described above, there has been a demand for a silicone composition having excellent handling properties and high tear strength after curing.

As a result of their diligent study to achieve the above objects, the inventor(s) found that a silicone composition had excellent handling properties and high tear strength after curing when containing silica particles having the surface highly hydrophobized and alkenyl groups bonded to a silicon atom, and have completed the present invention.

That is, the present invention is a silicone composition comprising the following components (A) to (D) :

(A) an organopolysiloxane having the viscosity at 25°C of 0.01 to 100 Pa·s and two or more alkenyl groups bonded to a silicon atom in one molecule: 100 parts by mass;
(B) hydrophobic silica particles having a volume median diameter in the range of 10 nm to 1,000 nm, a degree of hydrophobization, as determined by a methanol titration method, of 60% or more, and an alkenyl group bonded to a silicon atom on the surface: 10 to 500 parts by mass;
(C) an organohydrogenpolysiloxane having two or more hydrogen atoms bonded to a silicon atom in one molecule: an amount to provide 0.4 to 5.0 moles of the hydrogen atoms bonded to a silicon atom of the component (C) per mole of a total of the alkenyl groups bonded to a silicon atom in the composition; and
(D) a platinum group metal catalyst.

Hereinafter, the present invention is described in detail, but is not limited thereto.

The inventive silicone composition includes: (A) an organopolysiloxane having two or more alkenyl groups bonded to a silicon atom in one molecule; (B) hydrophobic silica particles having a volume median diameter in the range of 10 nm to 1,000 nm, a degree of hydrophobization, as determined by a methanol titration method, of 60% or more, and an alkenyl group bonded to a silicon atom on the surface; (C) an organohydrogenpolysiloxane having two or more hydrogen atoms bonded to a silicon atom in one molecule; (D) a platinum group metal catalyst; and, if necessary, (E) a reaction control agent.

[Component (A)]

The component (A) is an organopolysiloxane having a viscosity at 25°C of 0.01 to 100 Pa·s, preferably 0.03 to 10 Pa·s, and having two or more alkenyl groups bonded to a silicon atom in one molecule. When the viscosity at 25°C is smaller than 0.01 Pa·s, the mechanical strength of a cured product is deficient, and when exceeding 100 Pa·s, the viscosity of the composition becomes high, and the fluidity becomes poor. It should be understood that, in the present invention, the viscosity is a value measured by using a B-type rotational viscometer (hereinafter, the same applies).

The component (A) of such an organopolysiloxane is not particularly limited, as long as the component (A) meets the requirements for the above viscosity and the above alkenyl group content, the publicly known organopolysiloxane may be used, its structure may be linear or branched, and it may be a mixture of two or more kinds of organopolysiloxanes having different viscosities.

The alkenyl group bonded to a silicon atom, contained in the component (A) of the present invention, preferably has 2 to 10 carbon atoms, more preferably 2 to 8 carbon atoms. Examples thereof include a vinyl group, an allyl group, a 1-butenyl group, and a 1-hexenyl group. Among these, from the viewpoint of synthesis readiness and cost, the vinyl group is preferable. Although the alkenyl group may be present at any of the ends or the intermediate of the molecular chain of the organopolysiloxane, from the viewpoint of flexibility, it is preferable that the alkenyl groups are present only at both ends. The upper limit on the number of the alkenyl groups in one molecule of the component (A) is not specified; for example, it may be 50 or fewer.

Organic groups other than the alkenyl group bonded to a silicon atom contained in the inventive component (A) include a monovalent hydrocarbon group preferably having 1 to 20 carbon atoms, more preferably 1 to 10 carbon atoms. Examples of such a monovalent hydrocarbon group include: alkyl groups, such as a methyl group, an ethyl group, a propyl group, a butyl group, a hexyl group, and a dodecyl group; an aryl group, such as a phenyl group; aralkyl groups, such as a 2-phenylethyl group, and a 2-phenylpropyl group; a halogen atom-substituted monovalent hydrocarbon groups, exemplified by a fluoromethyl group, a bromomethyl group, a chloromethyl group and a 3,3,3-trifluoropropyl group, each in which part or all of the hydrogen atoms of these hydrocarbon group are substituted with a halogen atom, such as chlorine, fluorine, or bromine. Among these, from the viewpoint of synthesis readiness and cost, 90 mol% or more thereof is preferably a methyl group.

[Component (B)]

The component (B) is hydrophobic silica particles having an alkenyl group bonded to a silicon atom on the surface. By containing the component (B), the flowability of the composition can be maintained while increasing the mechanical strength of the cured product.

The component (B) has a volume median diameter of 10 to 1,000 nm, preferably 10 to 500 nm, and particularly preferably 10 to 200 nm. When the particle size is less than 10 nm, aggregation becomes severe, resulting in a loss of fluidity and transparency. When the particle size exceeds 1,000 nm, the transparency is lost, and the effect of enhancement of mechanical strength is small. It should be understood that the volume median diameter can be determined, using a laser analysis scattering particle size analyzer, as the particle size at which the cumulative volume reaches 50% when the particle size distribution is expressed in a cumulative distribution.

The degree of hydrophobization, as determined by a methanol titration method, of the component (B) is 60% or more, preferably 64% or more. The upper limit of the degree of hydrophobization is not specified, but is preferably 80% or less, more preferably 75% or less. Silica particles with a high degree of hydrophobilization do not aggregate even when highly contained in a composition, and allow the mechanical strength of the cured product to increase without impaired flowability.

The degree of hydrophobization is determined by the methanol titrimetric method shown below.

(1) A sample is floated in a predetermined amount of ion-exchange water, with stirring, and methanol is added dropwise.
(2) Determine the amount dropped when all of the sample is suspended in the ion-exchange water.
(3) A value in volume percentage, determined from [{methanol amount dropped (mL)}/{methanol amount dropped (mL) + ion-exchange water amount (mL)}$\times$100], is the degree of hydrophobization.

The shape of the component (B) of the present invention is not particularly limited, but it is preferably spherical.

The blending amount of the component B is 10 to 500 parts by mass, preferably 20 to 400 parts by mass, and more preferably 100 to 300 parts by mass, relative to 100 parts by mass of the component (A). When the blending amount is less than 10 parts by mass, the effect of improving mechanical strength is small, and when the blending amount exceeds 500 parts by mass, the viscosity becomes too high, and fluidity is poor.

The component (B) preferably has an $R^2SiO_{3/2}$ unit ($R^2$ represents a substituted or unsubstituted monovalent

hydrocarbon group having 1 to 20 carbon atoms) and an $R^A_{(a)}R^3_{(3-a)}SiO_{1/2}$ unit ("a" represents an integer of 1 to 3, $R^A$ represents an identical or different kind of substituted or unsubstituted alkenyl group having 2 to 8 carbon atoms, and $R^3$ represents an identical or different kind of substituted or unsubstituted alkyl group having 1 to 6 carbon atoms.) on the silica surface, and more preferably further has an $R^3_3SiO_{1/2}$ unit ($R^3$ represents an identical or different kind of substituted or unsubstituted alkyl group having 1 to 6 carbon atoms) on the silica surface.

Such a component (B) may be obtained, for example, by: hydrolyzing and condensing a tetrafunctional silane compound, an alkyl silicate, or a mixture thereof to obtain hydrophilic silica particles; and then introducing $R^2SiO_{3/2}$ units, followed by $R^A_{(a)}R^3_{(3-a)}SiO_{1/2}$ units and, if necessary, $R^3_3SiO_{1/2}$ units, onto the surfaces of the resulting particles by hydrolysis and condensation.

[Synthesis Method of Component (B)]

Specifically, the inventive component (B) is preferably synthesized in accordance with the following three steps,

Step (α): a step of synthesizing hydrophilic silica particles,
Step (β): a step of hydrophobizing treatment of the surface of the hydrophilic silica particles, and
Step (γ): a step of hydrophobizing treatment of the surface of an intermediate of the component (B) and introduction of an alkenyl group.

Hereinafter, each step will be sequentially described.

· Step (α): a step of synthesizing hydrophilic silica particles

It is a step of obtaining a dispersion of hydrophilic silica particles by hydrolyzing and condensing a tetrafunctional silane compound represented by the following general formula (i) and at least one of alkyl silicates represented by the following general formula (ii), in the presence of a basic substance, in a mixed solution of a hydrophilic organic solvent and water.

$$Si(OR^4)_4 \qquad (i)$$

$$Si(OR^4)_3\text{-}(\text{-}SiO(OR^4)_2\text{-})_m\text{-}Si(OR^4)_3 \qquad (ii)$$

In the formula, $R^4$ represents an identical or different kind of monovalent hydrocarbon group having 1 to 6 carbon atoms, and "m" represents 1 to 100.

In the general formulae (i) and (ii), although $R^4$ is identical or different kind of monovalent hydrocarbon group having 1 to 6 carbon atoms, preferably the monovalent hydrocarbon group having 1 to 4 carbon atoms, and particularly preferably monovalent hydrocarbon group having 1 to 2 carbon atoms. Examples of the monovalent hydrocarbon groups represented by the $R^4$ include: alkyl groups, such as a methyl group, an ethyl group, a propyl group, and a butyl group; and aryl groups, such as a phenyl group. Preferable example is a methyl group, an ethyl group, a propyl group, or a butyl group, and particularly preferable example is a methyl group or ethyl group.

In the general formula (ii), "m" represents 1 to 100, preferably 1 to 50, and particularly preferably 1 to 25.

Examples of the tetrafunctional silane compound represented by the general formula (i) include: tetraalkoxysilanes, such as tetramethoxysilane, tetraethoxysilane, tetrapropoxysilane, and tetrabutoxysilane; and tetraphenoxysilane. Preferable examples include tetramethoxysilane, tetraethoxysilane, tetrapropoxysilane and tetrabutoxysilane, and particularly preferable example include tetramethoxysilane and tetraethoxysilane. Furthermore, examples of the alkyl silicate represented by the general formula (ii) include methyl silicate and ethyl silicate, preferably methyl silicate.

One of these may be used, or two or more kinds thereof may be mixed and used.

The hydrophilic organic solvent used in the step (α) is not particularly limited as long as it is the solvent that dissolves the tetrafunctional silane compound represented by the general formula (i), the alkyl silicate represented by the general formula (ii), and water. Example thereof include: alcohols; cellosolves, such as methyl cellosolve, ethyl cellosolve, butyl cellosolve and cellosolve acetate; ketones, such as acetone and methyl ethyl ketone; and ethers, such as dioxane and tetrahydrofuran. Preferable examples include alcohols and cellosolves, and particularly preferable example include alcohols. As the alcohols, alcohols represented by the following general formula (xv) can be used.

$$R^6OH \qquad (xv)$$

In the formula, $R^6$ is a monovalent hydrocarbon group having 1 to 6 carbon atoms.

In the above formula (xv), $R^6$ represents a monovalent hydrocarbon group having 1 to 6 carbon atoms, preferably

having 1 to 4 carbon atoms, and particularly preferably a monovalent hydrocarbon group having 1 to 2 carbon atoms. Examples of the monovalent hydrocarbon group represented by the $R^6$ include alkyl groups, such as a methyl group, an ethyl group, a propyl group, an isopropyl group, and a butyl group, preferably a methyl group, an ethyl group, a propyl group, and an isopropyl group, more preferably a methyl group and an ethyl group. Examples of alcohols represented by the general formula (xv) include methanol, ethanol, propanol, isopropanol, and butanol, preferably methanol and ethanol. As the number of carbon atoms of the alcohol increases, the particle size of the silica particles produced becomes larger. Accordingly, in order to obtain silica particles having a targeted small particle size, methanol is preferable.

Furthermore, examples of the basic substance used in the step ($\alpha$) include ammonia, dimethylamine, and diethylamine, preferably ammonia and diethylamine, and particularly preferably ammonia. These basic substances, after dissolving a required amount in water, may be obtained by mixing an obtained aqueous solution (basic) with a hydrophilic organic solvent.

An amount used of the basic substance used in the step ($\alpha$) is preferably 0.01 to 2 mol, more preferably 0.02 to 0.5 mol, and particularly preferably 0.04 to 0.12 mol relative to 1 mol of total of hydrocarbyloxy groups of the tetrafunctional silane compound represented by the general formula (i) and/or alkyl silicate represented by the general formula (ii). At this time, as the amount of the basic substance is smaller, silica particles with a desired small particle size are obtained. Furthermore, the basic substance may be added in the mixed solution of water and the hydrophilic organic solvent simultaneously with adding the tetrafunctional silane compound and/or the alkyl silicate and the hydrophilic organic solvent.

The amount of water used in the hydrolysis and condensation is preferably 0.5 to 5 mol, more preferably 0.6 to 2 mol and particularly preferably 0.7 to 1 mol relative to 1 mol of total of the tetrafunctional silane compound represented by the general formula (i) and/or the hydrocarbyloxy groups of the alkyl silicate represented by the general formula (ii). Furthermore, as for the ratio of the water and the hydrophilic organic solvent, the hydrophilic organic solvent is preferably set to 10 to 200 parts by mass relative to 100 parts by mass of water.

The dispersion containing the obtained hydrophilic silica particles may be used as they are in the step ($\beta$). However, after adding water to the dispersion containing the hydrophilic silica particles, by distilling the hydrophilic organic solvent and being converted into an aqueous dispersion, the remaining alkoxy groups are hydrolyzed. Therefore, it is preferable to convert them into an aqueous dispersion containing the hydrophilic silica particles.

The conversion of the dispersion medium of the dispersion containing the silica particles into water may be performed, for example, by an operation (this operation is repeated as necessary) of distilling off the hydrophilic organic solvent by adding water to the dispersion. The amount of water added at this time is preferably 50 to 200 parts by mass, particularly preferably 80 to 150 parts by mass relative to 100 parts by mass of total amount of the hydrophilic organic solvent used and alcohol generated in the synthesis step of the hydrophilic silica particles.

· Step ($\beta$): a step of hydrophobizing treatment of the surface of the hydrophilic silica particles

This is a step of obtaining a dispersion of the silica particles (intermediate of hydrophobic silica particles) that are an intermediate of the component (B) by adding at least one of a trifunctional silane compound represented by the following general formula (iii) and its (partial) hydrolysis condensate (partial hydrolysis condensate or hydrolysis condensate) into the dispersion of the hydrophilic silica particles obtained in the step ($\alpha$) to perform surface treatment of the hydrophilic silica particles.

$$R^2Si(OR^5)_3 \qquad \text{(iii)}$$

In the formula, $R^2$ represents a substituted or unsubstituted monovalent hydrocarbon group having 1 to 20 carbon atoms, and $R^5$ represents an identical or different kind of monovalent hydrocarbon group having 1 to 6 carbon atoms.

In the general formula (iii), a monovalent hydrocarbon group represented by the $R^2$ is a substituted or unsubstituted monovalent hydrocarbon group having 1 to 20 carbon atoms, preferably 1 to 3 carbon atoms, and particularly preferably a monovalent hydrocarbon group having 1 to 2 carbon atoms. Examples of the $R^2$ include alkyl groups, such as a methyl group, an ethyl group, an n-propyl group, an isopropyl group, a butyl group, and a hexyl group, the preferable example is a methyl group, an ethyl group, an n-propyl group, or an isopropyl group, and the particularly preferable example is a methyl group or an ethyl group. Further, part or all of the hydrogen atoms of these monovalent hydrocarbon groups may be substituted with a halogen atom, such as a fluorine atom, a chlorine atom, or a bromine atom, and the preferable group is a fluorine-substituted alkyl group.

In the general formula (iii), a monovalent hydrocarbon group represented by $R^5$ is an identical or different kind of monovalent hydrocarbon group having 1 to 6 carbon atoms, preferably having 1 to 3 carbon atoms, and particularly preferably a monovalent hydrocarbon group having 1 to 2 carbon atoms. Examples of the $R^5$ include alkyl groups, such as

a methyl group, an ethyl group, a propyl group, and a butyl group, preferably a methyl group, an ethyl group, and a propyl group, and particularly preferably a methyl group and an ethyl group.

Examples of the trifunctional silane compounds represented by the general formula (iii) include unsubstituted or halogen-substituted trialkoxysilanes, such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, butyltrimethoxysilane, butyltriethoxysilane, hexyltrimethoxysilane, trifluoropropyltrimethoxysilane, and heptadecafluorodecyltrimethoxy silane, preferably methyltrimethoxysilane, methyltriethoxysilane, ethyltrimethoxysilane and ethyltriethoxysilane, and more preferably methyltrimethoxysilane and methyltriethoxysilane.

An addition amount of the trifunctional silane compound represented by the general formula (iii) is preferably 0.001 to 1 mol per 1 mol of Si atoms of the used hydrophilic silica particles, more preferably 0.01 to 0.4 mol, and particularly preferably 0.01 to 0.2 mol. When the addition amount is 0.001 mol or more, the degree of hydrophobilization of the obtained component (B) becomes higher, and thereby the dispersibility becomes excellent. When it is 1 mol or less, the risk of aggregation of the component (B) can be reduced.

· Step ($\gamma$): a step of treatment of the surface of an intermediate of the component (B) and introduction of an alkenyl group

This step is a step of obtaining the hydrophobic silica particles having an alkenyl group bonded to a silicon atom on the surface, which are the component (B), by treating a surface of silica particles, which are intermediates of the component (B), by adding a surface treatment agent including at least one of a silazane compound represented by the following general formula (iv) and a monofunctional silane compound represented by the following general formula (v) into the obtained dispersion of silica particles that are an intermediate of the component (B).

This step introduces $R^A{}_{(a)}R^3{}_{(3-a)}SiO_{1/2}$ units onto the surface of the hydrophobic silica particle intermediate by triorganosilylating the silanol group remaining on the surface.

$$R^A{}_{(a)}R^3{}_{(3-a)}SiNHSiR^A{}_{(a)}R^3{}_{(3-a)} \quad \text{(iv)}$$

$$R^A{}_{(a)}R^3{}_{(3-a)}SiX \quad \text{(v)}$$

In the formulae, "a" represents an integer of 1 to 3, $R^A$ represents an identical or different kind of substituted or unsubstituted alkenyl group having 2 to 8 carbon atoms, $R^3$ represents an identical or different kind of substituted or unsubstituted alkyl group having 1 to 6 carbon atoms, and "X" represents an OH group or a hydrolyzable group.

In the formulae (iv) and (v), the alkenyl group represented by $R^A$ has 2 to 8 carbon atoms, preferably 2 to 6 carbon atoms. Examples thereof include a vinyl group, an allyl group, a 3-butenyl group, and a 5-hexenyl group. Among these, in terms of synthesis readiness and cost, a vinyl group is particularly preferable.

In the general formulae (iv) and (v), the alkyl group represented by $R^3$ is preferably an alkyl group having 1 to 4 carbon atoms, particularly preferably an alkyl group having 1 to 2 carbon atoms. Preferable examples thereof include a methyl group, an ethyl group, a propyl group, an isopropyl group and a butyl group. Particularly preferable examples thereof include a methyl group and an ethyl group. Furthermore, part or all of the hydrogen atoms of these monovalent hydrocarbon groups may be substituted with a halogen atom, such as a fluorine atom, a chlorine atom, or a bromine atom, and it is preferably a fluorine-substituted alkyl group.

"X" in the above general formula (v) represents an OH group or a hydrolyzable group, and examples of the hydrolyzable group include a chlorine atom, an alkoxy group, an amino group, and an acyloxy group, preferably an alkoxy group and an amino group, and more preferably an alkoxy group. A methoxy group and an ethoxy group are particularly preferable.

Examples of the silazane compound represented by the general formula (iv) include hexavinyldisilazane, dimethyltetravinyldisilazane, and tetramethyldivinyldisilazane, and tetramethyldivinyldisilazane is preferable.

Examples of the monofunctional silane compound represented by general formula (v) include monosilanol compounds, such as dimethylvinylsilanol and diethylvinylsilanol; monochlorosilanes, such as dimethylvinylchlorosilane and diethylvinylchlorosilane; monoalkoxysilanes, such as dimethylvinylmethoxysilane and dimethylvinylethoxysilane; monoaminosilanes, such as dimethylvinylsilyldimethylamine and dimethylvinylsilyldiethylamine; and monoacyloxysilanes, such as dimethylvinylacetoxysilane. Dimethylvinylsilanol, dimethylvinylmethoxysilane, or dimethylvinylsilyldiethylamine is preferable, and dimethylvinylsilanol or dimethylvinylmethoxysilane is particularly preferable.

In the step ($\gamma$), the surface treatment agent preferably includes further at least one of a silazane compound represented by the following general formula (vi) and a monofunctional silane compound represented by the following general formula (vii).

$$R^3{}_3SiNHSiR^3{}_3 \quad \text{(vi)}$$

$R^3{}_3SiX$ (vii)

In the formulae, $R^3$ represents an identical or different kind of substituted or unsubstituted alkyl group having 1 to 6 carbon atoms, and "X" represents an OH group or a hydrolyzable group.

In the above general formulae (vi) and (vii), the alkyl group represented by $R^3$ is preferably an alkyl group having 1 to 4 carbon atoms, particularly preferably 1 to 2 carbon atoms, and preferable examples thereof include a methyl group, an ethyl group, a propyl group, an isopropyl group, and a butyl group, and particularly preferably a methyl group or an ethyl group. Part or all of the hydrogen atoms of these monovalent hydrocarbon groups may be substituted with a halogen atom, such as a fluorine atom, a chlorine atom, or a bromine atom, and a fluorine-substituted alkyl group is preferable.

The above "X" is an OH group or a hydrolyzable group, and examples of the hydrolyzable group include a chlorine atom, an alkoxy group, an amino group, and an acyloxy group. An alkoxy group or an amino group is preferable, an alkoxy group is more preferable, and a methoxy group or an ethoxy group is particularly preferable.

Examples of the silazane compound represented by the general formula (vi) include hexamethyldisilazane and tetraethyldisilazane, and hexamethylsilazane is preferable.

Examples of the monofunctional silane compound represented by the general formula (vii) include: monosilanol compounds, such as trimethyl silanol and triethyl silanol; monochlorosilanes, such as trimethylchlorosilane and triethylchlorosilane; monoalkoxysilanes, such as trimethyl methoxysilane and trimethyl ethoxysilane; monoamino silanes, such as trimethylsilyl dimethylamine and trimethylsilyl diethylamine; and monoacyloxy silanes, such as trimethylacetoxy silane. Trimethyl silanol, trimethyl methoxysilane, or trimethylsilyl diethylamine is preferable, and trimethyl silanol or trimethyl methoxysilane is particularly preferable.

An amount used of the above silazane compound and/or monofunctional silane compound is preferably 0.1 to 0.5 mol, more preferably 0.2 to 0.4 mol, and particularly preferably 0.25 to 0.35 mol relative to 1 mol of Si atoms of the hydrophilic silica particles used. When the amount used is 1 mol or more, the hydrophobicity of the obtained hydrophobic silica particles becomes higher, and the dispersibility is excellent. When considering the cost and so on, the amount used at 0.5 mol or less is sufficient.

In order to convert a dispersion medium of the mixed solvent dispersion of the hydrophobic silica particle intermediate obtained in the step (β) from a mixture of water or a hydrophilic organic solvent and alcohols generated during hydrolysis into a ketone-based solvent, by adding the ketone-based solvent to the dispersion, an operation (as needs arise, the operation is repeated) of distilling away the mixture of water or the hydrophilic organic solvent and the alcohols may be performed. An amount of the ketone-based solvent added at this time may be 50 to 500 parts by mass, preferably 100 to 300 parts by mass, relative to 100 parts by mass of the obtained hydrophobic silica particle intermediate. Specific examples of the ketone-based solvent used here include methyl ethyl ketone, methyl butyl ketone, and acetylacetone, and methyl isobutyl ketone is particularly preferable.

The component (B) obtained as shown above is converted to be obtained as powder according to ordinary methods, such as normal pressure drying and reduced pressure drying.

[Component (C)]

The component (C) is an organohydrogenpolysiloxane having two or more hydrogen atoms bonded to a silicon atom (Si-H group) in a molecule. This acts as a crosslinking agent that crosslinks the alkenyl groups in the component (A) or (B) by a hydrosilylation reaction. The upper limit of the number of hydrogen atoms bonded to a silicon atom in one molecule of the component (C) is not particularly limited; it can be, for example, 50 or fewer. The component (C) is not particularly limited as long as the amounts of the Si-H groups are satisfied, but is preferably one represented by the following average composition formula (viii).

$R^7{}_aH_bSiO_{(4-a-b)/2}$ (viii)

In the formula, $R^7$ independently represents an unsubstituted or substituted monovalent hydrocarbon group that does not contain an aliphatic unsaturated bond, "a" represents the number satisfying $0.7 \le a \le 2.1$, "b" represents the number satisfying $0.001 \le b \le 1.0$, provided that a+b is the number satisfying $0.8 \le a+b \le 3.0$.

In the average composition formula (viii), as the unsubstituted or substituted monovalent hydrocarbon group that does not contain the aliphatic unsaturated bond represented by the $R^7$, the monovalent hydrocarbon group having preferably 1 to 20 carbon atoms, more preferably 1 to 10 carbon atoms, is used. Examples of such a monovalent hydrocarbon group include: alkyl groups, such as a methyl group, an ethyl group, a propyl group, a butyl group, a hexyl group, and a dodecyl group; an aryl group, such as a phenyl group; aralkyl groups, such as a 2-phenylethyl group and a 2-phenylpropyl group; halogen-substituted monovalent hydrocarbon groups, such as a fluoromethyl group, a bromomethyl group, a chloromethyl group, and a 3,3,3-trifluoropropyl group, obtained by substituting part or all of the hydrogen atoms of

these hydrocarbon groups with a halogen atom, such as chlorine, fluorine, or bromine, and the methyl group or the phenyl group is preferable.

In the average composition formula (viii), "a", "b", and "a+b" are numbers satisfying 0.7 to 2.1, 0.001 to 1.0, and 0.8 to 3.0, respectively, and, preferably "a", "b", and "a+b" satisfy 1.0 to 2.0, 0.01 to 1.0, and 1.1 to 2.6, respectively.

Hydrogen atoms (Si-H group) bonded to a silicon atom, contained in the number of two or more in one molecule of the component (C), may be located at any of the molecular chain ends or the intermediates of the molecular chain, or may be located in both of these positions. Furthermore, the molecular structure of the organohydrogenpolysiloxane may be any one of a linear, cyclic, branched, or three-dimensional network structure, but the number of silicon atoms in one molecule (or the polymerization degree) is preferably 2 to 400, more preferably 3 to 200, and particularly preferably 4 to 100.

The organohydrogenpolysiloxane of the component (C) has preferably the viscosity at 25°C of 1,000 mPa·s or less (normally, 1 to 1,000 mPa·s), more preferably 5 to 200 mPa·s.

Specific examples of the organohydrogenpolysiloxane of the component (C) include 1,1,3,3-tetramethyldisiloxane, 1,3,5,7-tetramethylcyclotetrasiloxane, tris (hydrogendimethylsiloxy)methylsilane, tris (hydrogendimethylsiloxy)phenylsilane, methylhydrogencyclopolysiloxane, methylhydrogensiloxane/dimethylsiloxane cyclic copolymer, methylhydrogenpolysiloxane having both ends blocked with trimethylsiloxy groups, dimethylsiloxane/methylhydrogensiloxane copolymer having both ends blocked with trimethylsiloxy group, dimethylpolysiloxane having both ends blocked with dimethylhydrogensiloxy groups, dimethylsiloxane/methylhydrogensiloxane copolymer having both ends blocked with dimethylhydrogensiloxy groups, methylhydrogensiloxane/diphenylsiloxane copolymer having both ends blocked with trimethylsiloxy groups, methylhydrogensiloxane/diphenylsiloxane/dimethylsiloxane copolymer having both ends blocked with trimethylsiloxy groups, methylhydrogensiloxane/methylphenylsiloxane/dimethylsilo xane copolymer having both ends blocked with trimethylsiloxy groups, methylhydrogensiloxane/dimethylsiloxane/diphenylsiloxane copolymer having both ends blocked with dimethylhydrogensiloxy groups, methylhydrogensiloxane/dimethylsiloxane/methylphenylsilo xane copolymer having both ends blocked with dimethylhydrogensiloxy groups, a copolymer composed of a $(CH_3)_2HSiO_{1/2}$ unit, a $(CH_3)_3SiO_{1/2}$ unit, and a $SiO_{4/2}$ unit, a copolymer composed of a $(CH_3)_2HSiO_{1/2}$ unit and a $SiO_{4/2}$ unit, and a copolymer composed of a $(CH_3)_2HSiO_{1/2}$ unit, a $SiO_{4/2}$ unit, and a $(C_6H_5)_3SiO_{1/2}$ unit. Other than these, it is exemplified by ones represented by the following general formulae (ix) to (xiv).

$$R^7{}_3SiO[SiR^7(H)O]_tSiR^7{}_3 \quad (ix)$$

$$R^7{}_3SiO[SiR^7(H)O]_t[SiR^7{}_2O]_uSiR^7{}_3 \quad (x)$$

$$R^7{}_2(H)SiO[SiR^7(H)O]_tSi(H)R^7{}_2 \quad (xi)$$

$$R^7{}_2(H)SiO[SiR^7{}_2O]_uSi(H)R^7{}_2 \quad (xii)$$

$$R^7{}_2(H)SiO[SiR^7(H)O]_t[SiR^7{}_2O]Si(H)R^7{}_2 \quad (xiii)$$

$$[SiR^7(H)O]_v \text{ (annulus)} \quad (xiv)$$

In the formulae, $R^7$ represents the same as the defined above, "t" and "u" represent integers of 1 to 100, preferably 2 to 25, and "v" represents an integer of 4 to 8.

One kind of the component (C) may be used, or two or more kinds thereof may be used in combination.

The blending amount of the component (C) is an amount to provide 0.4 to 5.0 moles of the hydrogen atoms (Si-H group) bonded to a silicon atom of the component (C), preferably 0.5 to 5.0 mol, and more preferably 0.7 to 3.5 mol, per mole of a total of the alkenyl groups bonded to a silicon atom. When the amount is one to provide less than 0.4 or more than 5.0, the balance of the crosslinking becomes inappropriate, making it impossible for the cured product to achieve the high tear strength as the target.

[Component (D)]

The component (D) is a platinum group metal catalyst. The platinum group metal catalyst may be one that accelerates an addition reaction between the alkenyl groups contained in the component (A), the component (B), etc., and the Si-H groups of the component (C), and conventional publicly known ones may be used. Among these, a catalyst selected from platinum and a platinum compound is preferable.

Examples of such a catalyst include: platinum group simple metals, such as platinum (including platinum black), rhodium, and palladium; platinum chlorides, chloroplatinic acids, and chloroplatinates, such as $H_2PtCl_4 \cdot nH_2O$, $H_2PtCl_6 \cdot nH_2O$, $NaHPtCl_6 \cdot nH_2O$, $KHPtCl_6 \cdot nH_2O$, $Na_2PtCl_6 \cdot nH_2O$, $K_2PtCl_4 \cdot nH_2O$, $PtCl_4 \cdot nH_2O$, and $PtCl_2$, $Na_2HPtCl_4 \cdot nH_2O$ (wherein "n" in the formula is an integer of 0 to 6, preferably 0 or 6); alcohol-modified chloroplatinic acid, a complex of

chloroplatinic acid and olefin, platinum group metals, such as platinum black and palladium, supported on a carrier, such as alumina, silica, or carbon, a rhodium-olefin complex, chlorotris(triphenylphosphine)rhodium (Wilkinson catalyst), and complexes between platinum chloride, chloroplatinic acid, or chloroplatinate and vinyl group-containing siloxane. One of these platinum group metal catalysts may be used, or two or more kinds thereof may be used in combination.

The blending amount of the component (D) may be an effective amount as a catalyst, is not particularly limited as long as the amount can promote a reaction between the (A) component, (B) component, etc., with the component (C), and may be appropriately adjusted according to a desired curing rate. The blending amount of the component (D) is an amount to provide preferably 0.1 to 7,000 ppm, more preferably 1 to 6,000 ppm relative to a mass of the component (A), on a mass basis in terms of the platinum group metal atoms. When the blending amount of the component (D) is 0.1 ppm or more, an effect as the catalyst appropriately works; considering cost, etc., 7,000 ppm or less is sufficient.

[Component (E)]

The inventive silicone composition may further contain a reaction control agent as the component (E). The reaction control agent can suppress a curing reaction at room temperature and can extend the shelf life and the pot life. The reaction control agent is not particularly limited as long as it can suppress the catalytic activity of the component (D), and publicly known reaction control agents may be used. Examples of the reaction control agents include: acetylene compounds, such as 1-ethynyl-1-cyclohexanol and 3-butyn-1-ol; various kinds of nitrogen compounds; organophosphorous compounds; oxime compounds; and organochlorine compounds. Among these, acetylene alcohol, which has no corrosion properties on metals, is preferable.

The blending amount of the component (E) is 0.01 to 5.0 parts by mass, preferably 0.05 to 1 part by mass, relative to 100 parts by mass of the component (A). When the blending amount of the reaction control agent is 0.01 part by mass or more, a sufficient shelf life and a sufficient pot life can be achieved. When the blending amount of the reaction control agent is 5.0 parts by mass or less, the curability of the composition is not reduced. The reaction control agent may be used after diluting with an organic solvent, such as toluene, xylene, or isopropyl alcohol, to improve dispersibility in silicone resin.

[Other Components]

The inventive silicone composition, besides the above components (A) to (E), may contain publicly known additives as necessary. Examples of such additives include a silane coupling agent, silicone resin, a silicone-based/non-silicone-based adhesion aid, a hindered phenol-based antioxidant, a reinforcing or non-reinforcing filler, such as calcium carbonate, and polyether as a thixotropic improver. Furthermore, as necessary, a coloring agent, such as a pigment or dye may be added.

[Production Method, etc., of Silicone Composition]

The method for producing the inventive silicone composition is not particularly limited, and the conventionally publicly known methods may be used. That is, the inventive silicone composition may be obtained by mixing the components (A) to (D), and, as necessary, other components.

The inventive method for producing the silicone composition preferably include a process of producing the component (B) by a step including the following ($\alpha$), ($\beta$), and ($\gamma$), and a process of mixing, at least, the component (B) with the components (A), (C), and (D).

($\alpha$) a step of obtaining a dispersion of hydrophilic silica particles by hydrolyzing and condensing a tetrafunctional silane compound represented by the following general formula (i) and at least one of alkyl silicates represented by the following general formula (ii), in the presence of a basic substance, in a mixed solution of a hydrophilic organic solvent and water.

$$Si(OR^4)_4 \qquad (i)$$

$$Si(OR^4)_3\text{-}(\text{-}SiO(OR^4)_2\text{-})_m\text{-}Si(OR^4)_3 \qquad (ii)$$

In the formulae, $R^4$ represents an identical or different kind of monovalent hydrocarbon group having 1 to 6 carbon atoms, and "m" represents 1 to 100.

($\beta$) a step of obtaining a dispersion of silica particles that are an intermediate of the component (B) by treating a surface of the hydrophilic silica particles by adding at least one of a trifunctional silane compound represented by the following general formula (iii) and its (partial) hydrolysis condensate (partial hydrolysis condensate or hydrolysis condensate) into the obtained dispersion of the hydrophilic silica particles.

$R^2Si(OR^5)_3$ (iii)

In the formula, $R^2$ represents a substituted or unsubstituted monovalent hydrocarbon group having 1 to 20 carbon atoms, and $R^5$ represents an identical or different kind of monovalent hydrocarbon group having 1 to 6 carbon atoms.

($\gamma$) a step of obtaining the hydrophobic silica particles having an alkenyl group bonded to a silicon atom on the surface, which are the component (B), by treating a surface of silica particles, which are intermediates of the component (B), by adding at least one of a silazane compound represented by the following general formula (iv) and a monofunctional silane compound represented by the following general formula (v) into the obtained dispersion of silica particles that are an intermediate of the component (B).

$R^A_{(a)}R^3_{(3-a)}SiNHSiR^A_{(a)}R^3_{(3-a)}$ (iv)

$R^A_{(a)}R^3_{(3-a)}SiX$ (v)

In the formulae, "a" represents an integer of 1 to 3, $R^A$ represents an identical or different kind of substituted or unsubstituted alkenyl group having 2 to 6 carbon atoms, $R^3$ represents an identical or different kind of substituted or unsubstituted alkyl group having 1 to 6 carbon atoms, and "X" represents an OH group or a hydrolyzable group.

Since the detailed production method of the component (B) is as described above, it is omitted here.

A process of mixing the components (A) to (D) is not particularly limited. For example, in the case of a one-pack type composition, long-term storage is realized by refrigerating or freezing, and in the case of a two-pack type composition, long-term storage is realized at normal temperature.

In the case of the one-pack type composition, for example, the components (A) and (B) are taken in a gate mixer (product name: Planetary Mixer, manufactured by Inoue MFG., INC.), followed by heating and mixing at 150°C for 3 hours. After cooling the mixture, the component (E) is added thereto, followed by mixing at room temperature for 30 minutes, further followed by adding the components (C) and (D) thereto, and mixing at room temperature for 30 minutes to obtain the one-pack type composition.

In the case of the two-pack type composition, as long as a combination of only the components (A), (C), and (D) and a combination of only the components (B), (C), and (E) are not present together, an arbitrary combination thereof may be used for constitution. For example, the components (A) and (B) are taken to the gate mixer, heated and mixed at 150°C for 3 hours, cooled, and then the component (D) is added, followed by mixing at room temperature for 30 minutes, and the resulting composition is set as a material-A. The components (A), (C), and (E) are taken to the gate mixer, mixed at room temperature for 1 hour, and the resulting composition is set as a material-B. In this way, a material-A and a material-B can be obtained as a two-pack type composition.

The viscosity at 25°C of the inventive silicone composition is preferably 0.1 to 100 Pa·s, more preferably 1 to 50 Pa·s. When the viscosity at 25°C is 0.1 Pa·s or more, the desired mechanical strength may be achieved, and when it is 100 Pa·s or less, handling properties are excellent. It should be understood that the viscosity is measured using a B-type rotational viscometer.

The curing condition of the present silicone composition is not particularly limited, and the same condition as for the publicly known curable silicone composition may be used. Although curing can be performed at room temperature, it may be performed by heating. It may be performed at a temperature preferably of 20°C to 180°C, more preferably at 50 to 150°C, and the reaction time is preferably for 0.1 to 3 hours, and more preferably for 0.5 to 2 hours.

The cured product of the inventive silicone composition preferably has the tear strength, in accordance with JIS K 6252-1: 2015, of 15 kN/m or more, more preferably 20 kN/m or more.

According to the present inventions, the silicone composition has high handling properties and has high tear strength after curing. Such an inventive silicone composition can be used in applications that require high tear strength against possibility to generate a crack by thermal stress or external stress after curing. It may be used, for example, as an adhesive, sealing material, or a potting material, which are used for heat-generating components and requires crack resistance. Furthermore, it can also be used as a mold-making material and a material for an ultrasound probe lens, which is subject to high external stress. That is, when the inventive silicone composition is used as: an adhesive, a sealing material, or a potting material, which are present around heat-generating components, or a mold-making material, and a material for an ultrasound probe lens, the inventive silicone composition, after curing, has mechanical strength to suppress a crack generated potentially by thermal stress or external stress.

## EXAMPLE

Hereinafter, the present invention will be described in detail with reference to Examples and Comparative Examples, but the present invention is not limited thereto. Each of the components used in Examples and Comparative

Examples will be described below.

Component (A)

· A-1: Organopolysiloxane represented by the following formula and having the viscosity at 25°C of 5 Pa·s

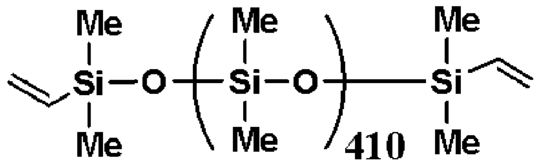

· A-2: Organopolysiloxane represented by the following formula and having the viscosity at 25°C of 5 Pa·s

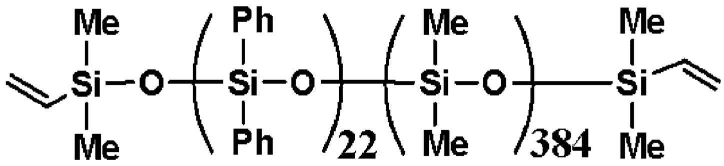

Component (B)

According to the following procedure, hydrophobic silica particles (B-1), (B-2), (B-3), and (B-4) were prepared.

[Synthesis Example 1]

· Step (α): synthesis step of hydrophilic silica particles

In a 3L glass reactor equipped with a stirrer, a dropping funnel, and a thermometer, 623.7 g of methanol, 41.4 g of water, and 49.8 g of 28 mass% ammonia water were charged and mixed. The solution was adjusted to 35°C, while stirring, 1,163.7 g of tetramethoxysilane and 418.4 g of 5.4% ammonia water were simultaneously started to add, and were dropped over 5 hours. Even after the completion of the dropping, the stirring was continued further for 0.5 hour to perform hydrolysis, and a suspension of hydrophilic spherical silica particles was obtained. An ester adapter and a cooling pipe were attached to the glass reactor, and at the time when heated to 60 to 70°C to distill off 649 g of methanol, 1,600 g of water was added, followed by further heating to 70 to 90°C to distill off 160 g of methanol, and an aqueous suspension of the hydrophilic silica particles was obtained.

· Step (β): Surface treatment step of hydrophilic silica particles

To the aqueous suspension, at 25°C, 115.8 g of methyltrimethoxysilane (0.1 equivalent based on $SiO_2$) and 46.6 g of 5.4% ammonia water were dropped over 0.5 hours, followed by heating to 50°C after the dropping, further followed by aging for 1 hour. The reaction was completed and cooled to 25°C, and surface treatment of the hydrophilic silica particles was performed.

· Step (γ): Step of surface treatment of the component (C) intermediate and introduction of an alkenyl group

After adding 1,000 g of methyl isobutyl ketone to the thus-obtained dispersion, while keeping the liquid interface in a vigorous wavy state, the dispersion was heated to 80 to 115°C to distil away 1,336 g of a mixed liquid of methanol and water over 11 hours. To the obtained dispersion, at 25°C, a mixture of 3.6 g of 1,3-divinyl-1,1,3,3-tetramethyldisilazane and 353.8 g of hexamethyldisilazane was added, followed by heating the dispersion to 120°C to react them for 3 hours to treat the surface of the silica particles to obtain a dispersion of a hydrophobic silica particle having an alkenyl group bonded to a silicon atom on the surface. Thereafter, the dispersion medium was distilled away under heating by an evaporator to obtain

477 g of the hydrophobic silica particles (B-1).

[Synthesis Example 2]

477 g of hydrophobic silica particles (B-2) were obtained in the same manner as in the step ($\alpha$) of Synthesis Example 1, except that 1,163.7 g of tetramethoxysilane was replaced with 901.9 g of methyl silicate (Methyl Silicate 51, manufactured by Colcoat Co., Ltd.).

[Comparative Synthesis Example 1]

470 g of hydrophobic silica particles (B-3) were obtained in the same manner as in the step ($\gamma$) of Synthesis Example 1, except that a mixture of 3.6 g of 1,3-divinyl-1,1,3,3-tetramethyldisilazane and 353.8 g of hexamethyldisilazane was replaced with 357.4 g of hexamethyldisilazane.

[Comparative Synthesis Example 2]

300 g of hydrophobic silica particles (B-4) were obtained in the same manner as in the step ($\gamma$) of Synthesis Example 1, except that a mixture of 3.6 g of 1,3-divinyl-1,1,3,3-tetramethyldisilazane and 353.8 g of hexamethyldisilazane was replaced with 119.1 g of hexamethyldisilazane.

[Measurement method]

The obtained hydrophobic silica particles were measured according to the following measurement methods 1 and 2. The obtained results are shown in Table 1.

1. Particle size measurement of hydrophobic silica particles

   (1) 0.1 g of the sample was placed in a glass bottle, and 20 g of methanol was added thereto, and the mixture was stirred.
   (2) The resultant mixture was dispersed for 10 minutes using an ultrasonic disperser to prepare a measurement sample.
   (3) The sample of (2) was measured using a laser analysis scattering particle size analyzer (Nanotra C150, manufactured by Nikkiso Co., Ltd.), and the volume median diameter (particle size at which the cumulative volume reaches 50% when the particle size distribution is expressed in a cumulative distribution) was defined as the particle size.

2. Measurement of the degree of hydrophobilization of hydrophobic silica particles (methanol titration method)

   (1) 0.2 mg of the sample was weighed into a 500 mL Erlenmeyer flask.
   (2) 50 mL of ion-exchanged water was added to (1), and the mixture was stirred with a stirrer.
   (3) While stirring, methanol was added dropwise from a burette, and the amount added when the entire sample was suspended in ion-exchanged water was read.
   (4) The degree of hydrophobilization was calculated using the following formula.

Degree of hydrophobilization (%) = {amount of methanol added (mL)} / {amount of methanol added (mL) + amount of ion-exchanged water (mL)} x 100

[Table 1]

| | Synthesis Example 1 | Synthesis Example 2 | Comparative Synthesis Example 1 | Comparative Synthesis Example 2 |
|---|---|---|---|---|
| Hydrophobic silica particle | (B-1) | (B-2) | (B-3) | (B-4) |
| Particle size (nm) | 87 | 82 | 82 | 80 |
| Degree of hydrophobilization | 67 | 67 | 67 | 55 |

(continued)

| | Synthesis Example 1 | Synthesis Example 2 | Comparative Synthesis Example 1 | Comparative Synthesis Example 2 |
|---|---|---|---|---|
| Process for introducing alkenyl group onto silica surface | Included | Included | Not included | Not included |

Component (C)

· C-1: Organohydrogensiloxane represented by the following formula

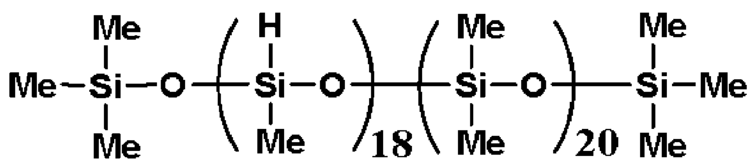

· C-2: Organohydrogensiloxane represented by the following formula

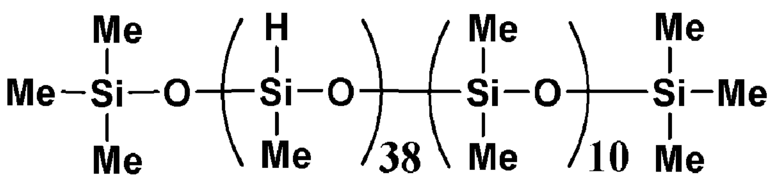

Component (D)

· D-1: Dimethylpolysiloxane solution of a platinum-divinyltetramethyldisiloxane complex (One obtained by dissolving in dimethylpolysiloxane that has both ends blocked with a dimethyl vinyl silyl group and has the viscosity at 25°C of 0.6 Pa·s. Platinum atoms are contained by 1 mass%.)

Component (E)

· E-1: 1-ethynyl-1-cyclohexanol

[Examples 1 to 3 and Comparative Examples 1 to 4] Preparation of Silicone Composition

The component (A), and the component (B) were added at blending amounts shown in Table 2 into the gate mixer (5L Planetary Mixer, manufactured by Inoue MFG., INC.), followed by heating and mixing at 150°C for 3 hours. Next, the component (E) was added to the mixture at the blending amounts shown in Table 2 and mixed at 25°C for 30 minutes. Finally, the components (C) and (D) were added the mixture at the blending amounts shown in Table 2 and mixed at 25°C for 30 minutes so as to be uniform. Each of the physical properties of the obtained respective compositions was measured according to the methods shown below. Results are shown together in Table 2.

[Viscosity]

The viscosity at 25°C of each of the silicone compositions was measured with a B-type viscometer.

[Tear strength]

Each silicone composition was press-cured at 120°C for 10 minutes and then heated further in an oven at 120°C for 50 minutes. The tear strength of the resulting 2.0 mm thick silicone sheets was measured in accordance with JIS K 6252-1:2015.

[Hardness]

Each of the silicone compositions was press-cured at 120°C for 10 minutes, followed furthermore by heating in an oven at 120°C for 50 minutes. With three sheets of the obtained silicone sheets having a thickness of 2.0 mm stacked, the hardness was measured using a type A durometer specified in JIS K 6253-3: 2012.

[Tensile strength, Elongation at break]

Each of the silicone compositions was press-cured at 120°C for 10 minutes, followed by further heating in an oven at 120°C for 50 minutes. The tensile strength and elongation at break of the obtained silicone sheet having a thickness of 2.0 mm were measured in accordance with JIS K 6251: 2017.

[Density after curing]

Each silicone composition was press-cured at 120°C. for 10 minutes and then heated in an oven at 120°C for 20 minutes. The density after curing of the resulting 2.0 mm thick silicone sheets was measured in accordance with JIS-K6249:2003.

[Table 2]

| | | | Example 1 | Example 2 | Example 3 | Comparative Example 1 | Comparative Example 2 | Comparative Example 3 | Comparative Example 4 |
|---|---|---|---|---|---|---|---|---|---|
| Blending amount (parts by mass) | Component (A) | A-1 | 100 | 0 | 0 | 100 | 100 | 0 | 0 |
| | | A-2 | 0 | 100 | 100 | 0 | 0 | 100 | 100 |
| | Component (B) | B-1 | 138 | 178 | 0 | 0 | 0 | 0 | 0 |
| | | B-2 | 0 | 0 | 138 | 0 | 0 | 0 | 0 |
| | | B-3 | 0 | 0 | 0 | 0 | 178 | 178 | 0 |
| | | B-4 | 0 | 0 | 0 | 0 | 0 | 0 | 178 |
| | Component (C) | C-1 | 4.3 | 0 | 0 | 0 | 0 | 0 | 4.3 |
| | | C-2 | 0 | 2.4 | 2.1 | 2.1 | 2.1 | 2.1 | 0 |
| | Component (D) | D-1 | 0.5 | 0.5 | 0.5 | 0.5 | 0.5 | 0.5 | 0.5 |
| | Component (E) | E-1 | 0.06 | 0.06 | 0.06 | 0.06 | 0.06 | 0.06 | 0.06 |
| Evaluation Result | Viscosity (Pa·s) | | 120 | 150 | 108 | 4.8 | 180 | 207 | Too viscous to handle |
| | Tear strength (kN/m) | | 22 | 27 | 25 | 0.4 | 8 | 6 | |
| | Hardness (Type A) | | 42 | 46 | 41 | 20 | 36 | 35 | |
| | Tensile strength (MPa) | | 4.5 | 4.6 | 4.8 | 0.4 | 5.0 | 5.5 | |
| | Elongation at break (%) | | 420 | 500 | 480 | 90 | 460 | 520 | |
| | Density after curing | | 1.35 | 1.40 | 1.37 | 1.00 | 1.39 | 1.39 | |

As shown in Table 2, the inventive silicone compositions produced in Examples 1 to 3 had viscosities that made them easy to handle, and the cured products had tear strengths of 22 kN/m or more in accordance with JIS K 6252-1:2015.

On the other hand, Comparative Example 1, in which the component (B) was not contained, and Comparative Examples 2 and 3, in which the component (B) was changed to hydrophobic silica having no alkenyl group on the surface, exhibited insufficient tear strength and poor mechanical properties. Furthermore, Comparative Example 4, in which the component (B) with an insufficient degree of hydrophobilization, produced a composition with an excessively high viscosity that was difficult to handle.

From the above, it has become clear that the present invention provides a silicone composition that has excellent handling properties and high tear strength after curing.

The present description includes the following embodiments.

[1]: A silicone composition comprising the following components (A) to (D):

(A) an organopolysiloxane having the viscosity at 25°C of 0.01 to 100 Pa·s and two or more alkenyl groups bonded to a silicon atom in one molecule: 100 parts by mass;
(B) hydrophobic silica particles having a volume median diameter in the range of 10 nm to 1,000 nm, a degree of hydrophobization, as determined by a methanol titration method, of 60% or more, and an alkenyl group bonded to a silicon atom on the surface: 10 to 500 parts by mass;
(C) an organohydrogenpolysiloxane having two or more hydrogen atoms bonded to a silicon atom in one molecule: an amount to provide 0.4 to 5.0 moles of the hydrogen atoms bonded to a silicon atom of the component (C) per mole of a total of the alkenyl groups bonded to a silicon atom in the composition; and
(D) a platinum group metal catalyst.

[2]: The silicone composition of the above [1], wherein the component (B) has an $R^2SiO_{3/2}$ unit ($R^2$ represents a substituted or unsubstituted monovalent hydrocarbon group having 1 to 20 carbon atoms) and an $R^A{}_{(a)}R^3{}_{(3-a)}SiO_{1/2}$ unit ("a" represents an integer of 1 to 3, $R^A$ represents an identical or different kind of substituted or unsubstituted alkenyl group having 2 to 8 carbon atoms, and $R^3$ represents an identical or different kind of substituted or unsubstituted alkyl group having 1 to 6 carbon atoms.) on the silica surface.
[3]: The silicone composition of the above [2], wherein the component (B) further has an $R^3{}_3SiO_{1/2}$ unit ($R^3$ represents an identical or different kind of substituted or unsubstituted alkyl group having 1 to 6 carbon atoms) on the silica surface.
[4]: The silicone composition of any one of the above [1] to [3], wherein the component (B) has a volume median diameter of 10 nm to 200 nm.
[5]: The silicone composition of any one of the above [1] to [4], wherein the blending amount of the component (B) is 100 to 300 parts by mass relative to 100 parts by mass of the component (A).
[6]: The silicone composition of any one of the above [1] to [5], further comprising a reaction control agent (E) in an amount of 0.01 to 5.0 parts by mass relative to 100 parts by mass of the component (A).
[7]: A method for producing the silicone composition of any one of the above [1] to [6], comprising a process of producing the component (B) by a step comprising the following ($\alpha$), ($\beta$), and ($\gamma$), and a process of mixing, at least, the component (B) with the components (A), (C), and (D):

($\alpha$) a step of obtaining a dispersion of hydrophilic silica particles by hydrolyzing and condensing a tetrafunctional silane compound represented by the following general formula (i) and at least one of alkyl silicates represented by the following general formula (ii), in the presence of a basic substance, in a mixed solution of a hydrophilic organic solvent and water,

$$Si(OR^4)_4 \qquad (i)$$

$$Si(OR^4)_3\text{-}(\text{-}SiO(OR^4)_2\text{-})_m\text{-}Si(OR^4)_3 \qquad (ii)$$

wherein $R^4$ represents an identical or different kind of monovalent hydrocarbon group having 1 to 6 carbon atoms, and "m" represents 1 to 100;
($\beta$) a step of obtaining a dispersion of silica particles that are an intermediate of the component (B) by treating a surface of the hydrophilic silica particles by adding at least one of a trifunctional silane compound represented by the following general formula (iii) and its (partial) hydrolysis condensate into the obtained dispersion of the hydrophilic silica particles,

$$R^2Si(OR^5)_3 \qquad (iii)$$

wherein $R^2$ represents a substituted or unsubstituted monovalent hydrocarbon group having 1 to 20 carbon atoms, and $R^5$ represents an identical or different kind of monovalent hydrocarbon group having 1 to 6 carbon atoms; and

(γ) a step of obtaining the hydrophobic silica particles having an alkenyl group bonded to a silicon atom on the surface, which are the component (B), by treating a surface of silica particles, which are intermediates of the component (B), by adding a surface treatment agent comprising at least one of a silazane compound represented by the following general formula (iv) and a monofunctional silane compound represented by the following general formula (v) into the obtained dispersion of silica particles that are an intermediate of the component (B),

$$R^A_{(a)}R^3_{(3-a)}SiNHSiR^A_{(a)}R^3_{(3-a)} \quad \text{(iv)}$$

$$R^A_{(a)}R^3_{(3-a)}SiX \quad \text{(v)}$$

wherein "a" represents an integer of 1 to 3, $R^A$ represents an identical or different kind of substituted or unsubstituted alkenyl group having 2 to 8 carbon atoms, $R^3$ represents an identical or different kind of substituted or unsubstituted alkyl group having 1 to 6 carbon atoms, and "X" represents an OH group or a hydrolyzable group.

[8]: The method for producing the silicone composition of the above [7], wherein the surface treatment agent of the step (γ) further comprises at least one of a silazane compound represented by the following general formula (vi) and a monofunctional silane compound represented by the following general formula (vii),

$$R^3_3SiNHSiR^3_3 \quad \text{(vi)}$$

$$R^3_3SiX \quad \text{(vii)}$$

wherein $R^3$ represents an identical or different kind of substituted or unsubstituted alkyl group having 1 to 6 carbon atoms, and "X" represents an OH group or a hydrolyzable group.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

**1.** A silicone composition comprising the following components (A) to (D):

(A) an organopolysiloxane having the viscosity at 25°C of 0.01 to 100 Pa·s and two or more alkenyl groups bonded to a silicon atom in one molecule: 100 parts by mass;
(B) hydrophobic silica particles having a volume median diameter in the range of 10 nm to 1,000 nm, a degree of hydrophobization, as determined by a methanol titration method, of 60% or more, and an alkenyl group bonded to a silicon atom on the surface: 10 to 500 parts by mass;
(C) an organohydrogenpolysiloxane having two or more hydrogen atoms bonded to a silicon atom in one molecule: an amount to provide 0.4 to 5.0 moles of the hydrogen atoms bonded to a silicon atom of the component (C) per mole of a total of the alkenyl groups bonded to a silicon atom in the composition; and
(D) a platinum group metal catalyst.

**2.** The silicone composition according to claim 1, wherein the component (B) has an $R^2SiO_{3/2}$ unit ($R^2$ represents a substituted or unsubstituted monovalent hydrocarbon group having 1 to 20 carbon atoms) and an $R^A_{(a)}R^3_{(3-a)}SiO_{1/2}$ unit ("a" represents an integer of 1 to 3, $R^A$ represents an identical or different kind of substituted or unsubstituted alkenyl group having 2 to 8 carbon atoms, and $R^3$ represents an identical or different kind of substituted or unsubstituted alkyl group having 1 to 6 carbon atoms.) on the silica surface.

**3.** The silicone composition according to claim 2, wherein the component (B) further has an $R^3_3SiO_{1/2}$ unit ($R^3$ represents an identical or different kind of substituted or unsubstituted alkyl group having 1 to 6 carbon atoms) on the silica surface.

4. The silicone composition according to claim 1, wherein the component (B) has a volume median diameter of 10 nm to 200 nm.

5. The silicone composition according to claim 1, wherein the blending amount of the component (B) is 100 to 300 parts by mass relative to 100 parts by mass of the component (A).

6. The silicone composition according to claim 1, further comprising a reaction control agent (E) in an amount of 0.01 to 5.0 parts by mass relative to 100 parts by mass of the component (A).

7. A method for producing the silicone composition according to any one of claims 1 to 6, comprising a process of producing the component (B) by a step comprising the following (α), (β), and (y), and a process of mixing, at least, the component (B) with the components (A), (C), and (D):

(α) a step of obtaining a dispersion of hydrophilic silica particles by hydrolyzing and condensing a tetrafunctional silane compound represented by the following general formula (i) and at least one of alkyl silicates represented by the following general formula (ii), in the presence of a basic substance, in a mixed solution of a hydrophilic organic solvent and water,

$$Si(OR^4)_4 \qquad (i)$$

$$Si(OR^4)_3\text{-}(\text{-}SiO(OR^4)_2\text{-})_m\text{-}Si(OR^4)_3 \qquad (ii)$$

wherein $R^4$ represents an identical or different kind of monovalent hydrocarbon group having 1 to 6 carbon atoms, and "m" represents 1 to 100;

(β) a step of obtaining a dispersion of silica particles that are an intermediate of the component (B) by treating a surface of the hydrophilic silica particles by adding at least one of a trifunctional silane compound represented by the following general formula (iii) and its (partial) hydrolysis condensate into the obtained dispersion of the hydrophilic silica particles,

$$R^2Si\ (OR^5)_3 \qquad (iii)$$

wherein $R^2$ represents a substituted or unsubstituted monovalent hydrocarbon group having 1 to 20 carbon atoms, and $R^5$ represents an identical or different kind of monovalent hydrocarbon group having 1 to 6 carbon atoms; and

(γ) a step of obtaining the hydrophobic silica particles having an alkenyl group bonded to a silicon atom on the surface, which are the component (B), by treating a surface of silica particles, which are intermediates of the component (B), by adding a surface treatment agent comprising at least one of a silazane compound represented by the following general formula (iv) and a monofunctional silane compound represented by the following general formula (v) into the obtained dispersion of silica particles that are an intermediate of the component (B),

$$R^A{}_{(a)}R^3{}_{(3\text{-}a)}SiNHSiR^A{}_{(a)}R^3{}_{(3\text{-}a)} \qquad (iv)$$

$$R^A{}_{(a)}R^3{}_{(3\text{-}a)}SiX \qquad (v)$$

wherein "a" represents an integer of 1 to 3, $R^A$ represents an identical or different kind of substituted or unsubstituted alkenyl group having 2 to 8 carbon atoms, $R^3$ represents an identical or different kind of substituted or unsubstituted alkyl group having 1 to 6 carbon atoms, and "X" represents an OH group or a hydrolyzable group.

8. The method for producing the silicone composition according to claim 7, wherein the surface treatment agent of the step (γ) further comprises at least one of a silazane compound represented by the following general formula (vi) and a monofunctional silane compound represented by the following general formula (vii),

$$R^3{}_3SiNHSiR^3{}_3 \qquad (vi)$$

$$R^3{}_3SiX \qquad (vii)$$

wherein $R^3$ represents an identical or different kind of substituted or unsubstituted alkyl group having 1 to 6 carbon atoms, and "X" represents an OH group or a hydrolyzable group.

## INTERNATIONAL SEARCH REPORT

International application No.
**PCT/JP2024/029305**

**A. CLASSIFICATION OF SUBJECT MATTER**

***C08L 83/07***(2006.01)i; ***C08K 3/36***(2006.01)i; ***C08K 9/06***(2006.01)i
FI: C08L83/07; C08K3/36; C08K9/06

According to International Patent Classification (IPC) or to both national classification and IPC

**B. FIELDS SEARCHED**

Minimum documentation searched (classification system followed by classification symbols)

C08L83/07; C08K3/36; C08K9/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2022/113696 A1 (SHIN-ETSU CHEMICAL CO., LTD.) 02 June 2022 (2022-06-02)<br>claims, paragraphs [0047]-[0065], examples | 1-2, 4-6<br>3, 7-8 |
| X<br>A | WO 2022/249858 A1 (SHIN-ETSU CHEMICAL CO., LTD.) 01 December 2022 (2022-12-01)<br>claims, paragraphs [0030]-[0042], examples | 1-2, 4-6<br>3, 7-8 |
| A | JP 2022-129112 A (SHIN-ETSU CHEMICAL CO., LTD.) 05 September 2022 (2022-09-05)<br>claims, examples | 1-8 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/029305**

| Patent document cited in search report | Publication date (day/month/year) | Patent family member(s) | Publication date (day/month/year) |
|---|---|---|---|
| WO 2022/113696 A1 | 02 June 2022 | US 2023/0407011 A1<br>claims, paragraphs [0079]-[0101], examples<br>JP 2022-85603 A<br>EP 4253465 A1<br>CN 116438243 A<br>KR 10-2023-0109140 A | |
| WO 2022/249858 A1 | 01 December 2022 | TW 202313787 A | |
| JP 2022-129112 A | 05 September 2022 | EP 4299518 A1<br>claims, examples<br>WO 2022/181018 A1<br>CN 116897139 A<br>KR 10-2023-0150276 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000351901 A
- JP 2013064089 A
- JP 2012144595 A
- JP 2019001975 A